# EUROPÄISCHE PATENTSCHRIFT

(11) **EP 1 274 611 B1**
(45) Veröffentlichungstag und Bekanntmachung des Hinweises auf die Patenterteilung: **01.09.2004**
(21) Anmeldenummer: 01940129.8
(22) Anmeldetag: 09.04.2001
(51) Int. Cl.: B60R 21/20

(54) **AIRBAGVORRICHTUNG UND BETRIEBSVERFAHREN DAFÜR**
AIRBAG DEVICE AND METHOD FOR OPERATING THE SAME
DISPOSITIF SAC GONFLABLE ET SON PROCEDE DE FONCTIONNEMENT

(30) Priorität: 07.04.2000 DE 20006449 U; 28.06.2000 DE 20011357 U
(43) Veröffentlichungstag der Anmeldung: 15.01.2003
(73) Patentinhaber: Volkswagen AG, 38440 Wolfsburg (DE)
(72) Erfinder: MÜLLER, Olaf, 65428 Rüsselsheim (DE)
(74) Vertreter: Lindner, Manfred Klaus, Dipl.-Phys.
(86) Internationale Anmeldenummer: PCT/DE2001/001379
(87) Internationale Veröffentlichungsnummer: WO 2001/076918

(56) Entgegenhaltungen:
- EP-A- 0 867 346
- DE-A- 19 750 182
- DE-U- 29 914 924
- PATENT ABSTRACTS OF JAPAN vol. 017, no. 358 (M-1440), 7. Juli 1993 (1993-07-07) & JP 05 050893 A (NISSAN MOTOR CO LTD), 2. März 1993 (1993-03-02)

## Beschreibung

Die Erfindung betrifft allgemein eine Airbagvorrichtung sowie ein Betriebsverfahren dafür.

Die auf den vorliegenden Anmelder/Inhaber zurückgehenden älteren deutschen Patentanmeldungen 197 12 782.7, 197 26 878.1 und 197 33 896.8, die gattungsbildende europäische Patentanmeldung 98 10 55 51.0 EP-A-0 807 346, internationale Patentanmeldung PCT/DE 99/01564 WO99/61288 sowie die Gebrauchsmusteranineidungen 298 08 317.5, 298 09 554.8, 298 19 165.2, 298 20 722.2, 299 05 000.9, 299 05 919.7, 299 07 102.2, 299 08 946.0, 299 10 059.6, 29913628.0 und 29921247.5 befassen sich allgemein mit einer Airbagvorrichtung sowie einem Auslöse- oder Betriebsverfahren dafür.

Mit der vorliegenden Erfindung wird das Ziel angestrebt und erreicht, eine Airbagvorrichtung sowie ein Auslöseverfahren dafür gemäß den vorstehend genannten älteren Anmeldungen weiter zu verbessern. Insbesondere wird eine platzsparende Bauart und deren Betriebsverfahren für eine Airbagvorcichtung geschaffen. Dabei kann die vorliegende Erfindung als Ergänzung zu den vorstehend angegebenen Schutzrechtsanmeldungen der gleichen Anmelderin zum Einsatz kommen und in vorteilhafter Weise weiter zu einer Reduzierung der Aggressivität des Bags beitragen, indem eine Mechanik die Airbagabdeckung in die Armaturentafel zieht.

Erfindungsgemäß wird eine Airbagvorrichtung mit einem Airbagmodul und wenigstens einem Airbagdeckel geschaffen, der mittels Zugeinrichtungen mit einem Kolben verbunden ist, der pyrotechnisch für eine Linearbewegung beaufschlagbar ist, und bei Beaufschlagung des Kolbens aus einer Schließlage, in der er einen Austrittsweg eines Airbags aus dem Airbagmodul abdeckt, in einer Offenlage bewegt wird, in der er den Austrittsweg des Airbags aus dem Airbagmodul freigibt, wobei eine schraubenartige Zwangsführung für den Kolben vorgesehen ist und die Zugeinrichtungen seilartig ausgestaltet sind, so dass der Kolben infolge einer Beaufschlagung während seiner Linearbewegung eine Drehbewegung ausführt und dabei die Zugeinrichtungen aufwickelt.

In besonders geschickter und vorteilhafter weise wird dadurch eine einfach, sicher und kostengünstig zu realisierende lineare Beaufschlagung des Kolbens genutzt und mit einem platzsparenden Aufwickeln der Zugeinrichtungen kombiniert.

Vorzugsweise ist dabei weiter vorgesehen, dass die Zwangsführung durch wenigstens eine Kulissenführung längs des Bewegungsweges des Kolbens gebildet ist, der wenigstens einen Fortsatz aufweist, der an der Kulissenführung anliegt oder in die Kulissenführung eingreift. Dabei kann der wenigstens eine Fortsatz durch einen Bolzen oder eine Schraube gebildet sein. Es können auch an dem Kolben in Richtung seiner Linearbewegung beabstandet zwei Fortsätze vorgesehen und jedem dieser beiden Fortsätze eine Kulissenführung zugeordnet sein. Dabei ist insbesondere bevorzugt, wenn die Zugeinrichtungen über die vorhandenen Fortsätze des Kolbens an letzterem angreifen.

Ferner ist es bevorzugt, wenn die Zugeinrichtungen zumindest einen Draht, ein Seil oder ein Band enthalten, mittels dem der Airbagdeckel mit dem Kolben verbunden ist. Mit Vorzug ist dabei vorgesehen, dass das Seil oder der Draht aus Metall besteht oder dass das Band aus einem textilen Material oder Kunststoff oder einer Mischung daraus besteht.

Weitere vorzugsweise Ausgestaltungen der Erfindung bestehen darin, dass der Kolben tassenartig über einen Gasgenerator des Airbagmoduls gestülpt ist, und/oder dass der Kolben in einem Gehäuse des Airbagmoduls insbesondere durch ein Gehäuse des Gasgenerators geführt ist.

Mit Vorzug enthält die Kulissenführung eine Steuerkante oder eine Schlitzkulisse.

Das Ziel der Erfindung wird ferner durch ein Betriebsverfahren für eine Airbagvorrichtung erreicht, wobei wenigstens ein Airbagdeckel mittels Zugeinrichtungen durch einen Kolben, der pyrotechnisch für eine Linearbewegung beaufschlagt wird, aus einer Schließlage, in der er einen Austrittsweg eines Airbags aus dem Airbagmodul abdeckt, in einer Offenlage bewegt wird, in der er den Austrittsweg des Airbags aus dem Airbagmodul freigibt, und wobei der Kolben infolge einer Beaufschlagung eine schraubenartige Bewegung ausführt und dabei die Zugeinrichtungen aufwickelt, so dass diese an dem Airbagdeckel ziehen und ihn aus der Schließlage in die Offenlage bewegen.

Die Erfindung wird anhand eines exemplarischen Ausführangsbeispieles nachfolgend unter Bezugnahme auf die Zeichnung näher erläutert, in der

Fig. 1 bis 5 verschiedene schematische Schnittansichten eines Ansführungsbeispiels der Erfindung zeigen, und

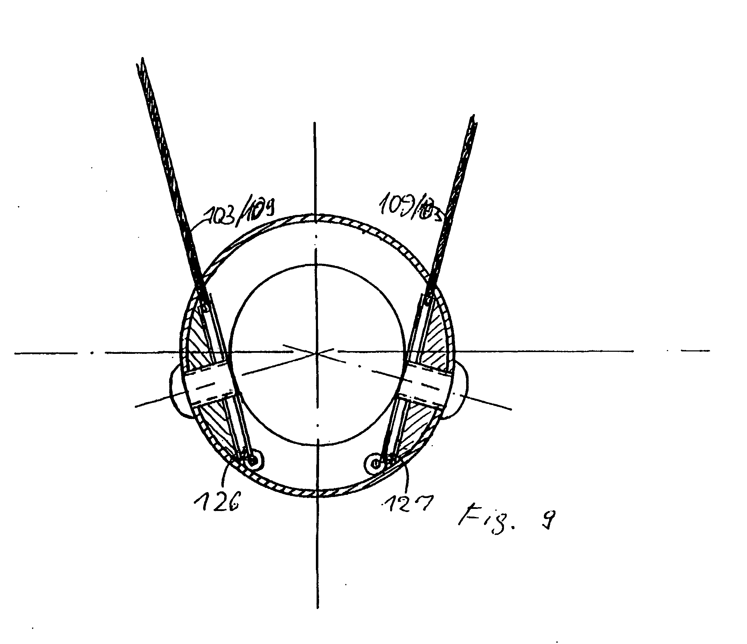

Fig. 6 bis 11 verschiedene schematische Schnittansichten eines nicht erfindungsgemäßen zweiten Beispiels zeigen.

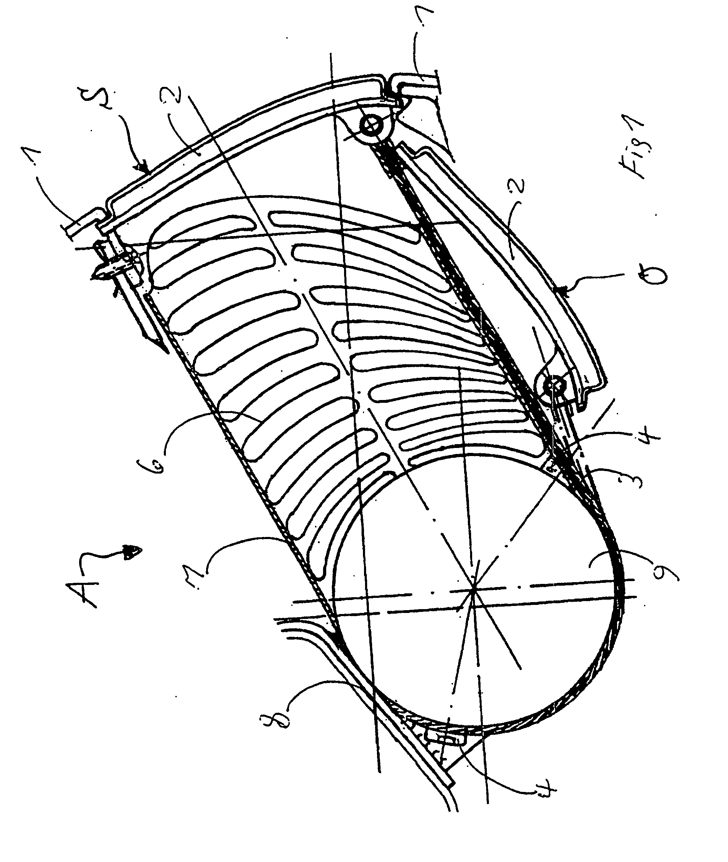

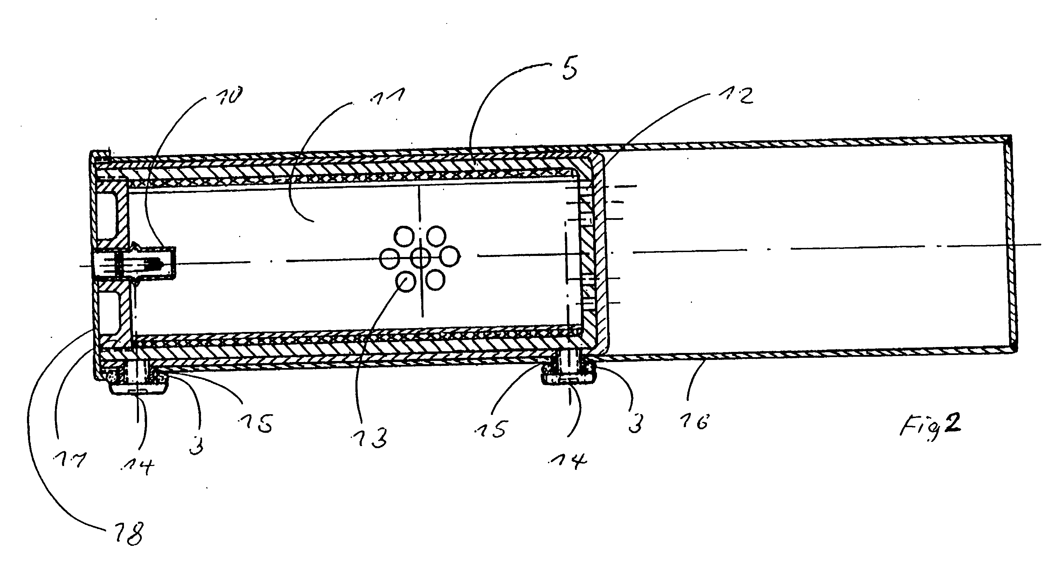

Die Fig. 1 zeigt im Querschnitt schematisch eine Armaturentafel 1 mit einem leicht zu öffnendem Airbagdeckel 2. Letzterer ist oben und unten in gesteckter bzw. verclipster Weise in die ihm umgebende Armaturentafel 1 gesteckt. Am Airbagdeckel 2 sind Seile 3 als Zugeinrichtungen (vorzugsweise je ein Seil an beiden seitlichen Enden des Airbagdeckels 2) angebracht. Diese Seile 3 sind mit je einer Anschraubung 4 an einem Kolben 5 (gezeigt in Fig. 2) befestigt. Weiterhin zeigt die Fig. 1 einen in vorteilhafter Weise "weich" gefalteten Airbag 6 des Airbagmodulgehäuses 7, die Karosserie 8 und ein Airbagmodul 9. Die Position des Airbagdeckels 2 ist vor und nach einem Crash und somit einer Auslösung der Airbagvorrichtung gezeigt, die insgesamt mit A bezeichnet ist. Der Airbagdeckel 2 ist in einer Schließlage S und in einer Offenlage O gezeigt.

Die Fig. 2 zeigt einen senkrecht zur Fig. 1 liegenden Schnitt durch das Airbagmodul 9. Die ineinander geschachtelten Teile, wie Zündkartusche 10, Gasgenerator 11, Kolben 5, Gasdurchströmlöcher 12 für die Beaufschlagung des Kolbens 5 (an einer Stirnseite) und Gasdurchströmlöcher 13 für den Airbag 6 sind aus der Darstellung alleine heraus bereits verständlich gezeigt. Die Seile 3 sind mittels Schrauben 14 am Kolben 5 befestigt. Abstandsringe 15 garantieren die Beweglichkeit des Kolbens 5 im Gehäuse 16. Ein Gasgeneratorgehäuse 16 und der Gasgenerator 11 sind in bevorzugter Weise mit Deckeln 17 und 18 versehen.

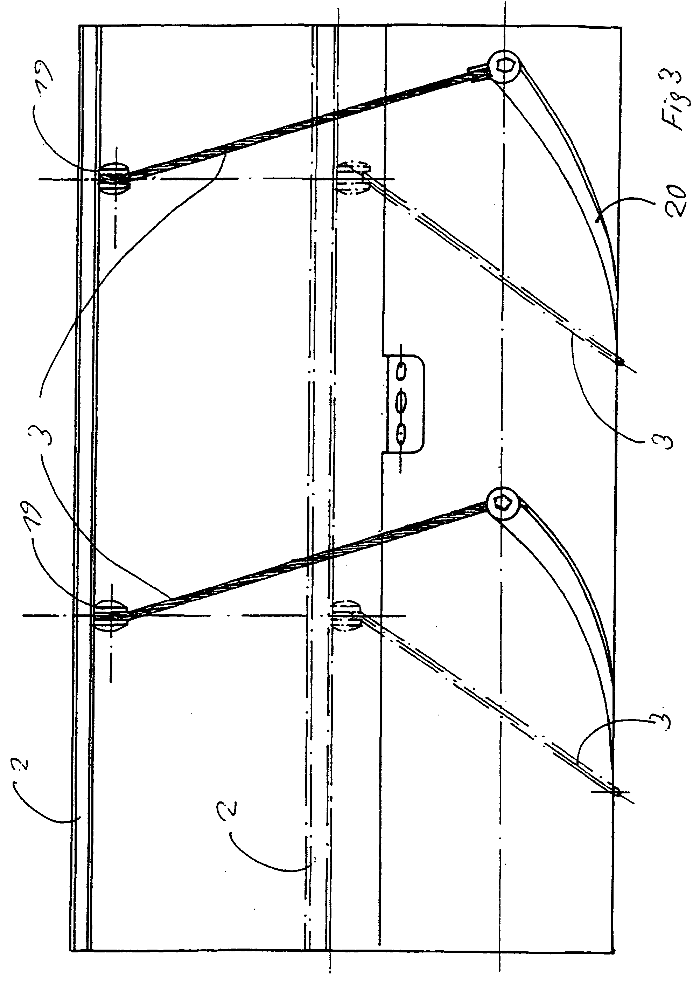

Die Fig. 3 zeigt in einer Seitenansicht des Airbagmoduls 9 Seilanbindungen 19 am Airbagdekkel 2. Im Gasgeneratorgehäuse 16 sind schraubenförmig Kulissenführungen 20 in Form von Schlitzkulissen eingebracht. Bei einem Crash muß sich der Kolben 5 also "schraubenförmig" in den Kulissenführungen 20 mit Schrauben 14 zwangsgeführt vorwärts bewegen, angetrieben durch den Gasstoß des Gasgenerators 11 durch die Gasdurchströmlöcher 12. Die Seile 3 führen deshalb außer ihrer "Längsbewegung" entsprechend der linearen Bewegungskomponente des Kolbens 5 auch noch eine seitliche Winkelbewegung entsprechend der Drehbewegung des Kolbens 5 durch, wie "strichpunktiert" gezeigt ist. Diese einfache Technik ist insbesondere nutzbringend, wenn z.B. kleine Airbagdeckel 2 nur als leicht zu lösende separate Teile ausgeführt sind.

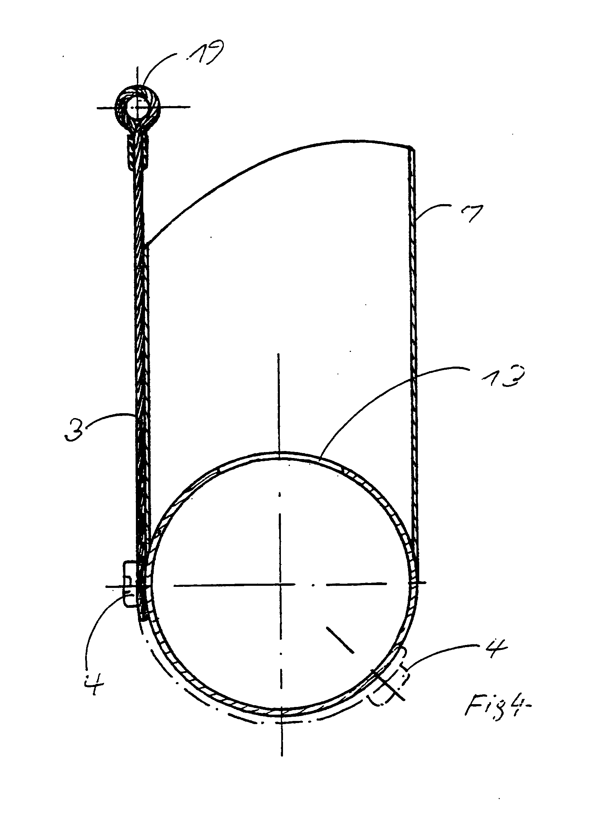

Zur weiteren Veranschaulichung ist in der Fig. 4 ein Schnitt in Höhe der Anschraubung 4 gezeigt. Es ist hier veranschaulicht, wie der sich auch drehende Kolben 5 die Anschraubung 4 während eines Crashs in eine neue Position bringt und damit den Airbagdeckel 2 zum Airbagmodul 9 zieht.

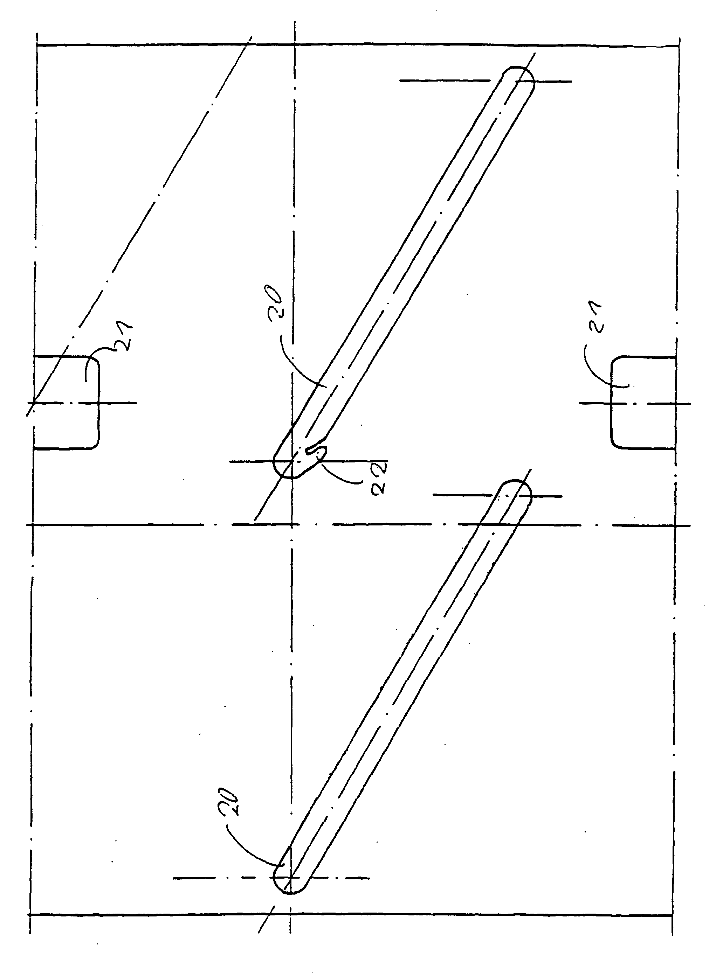

In der Fig. 5 ist zur weiteren Verdeutlichung der Erfindung das Gasgeneratorgehäuse 16 abgewinkelt dargestellt. Gezeigt sind die Kulissenführungen 20 und ein Gasdurchgangsloch 21. An mindestens einer der Kulissenführungen 20 ist am Ende eine "Bremse" 22 angebracht. Diese "Bremse" 22 wirkt durch Verbiegen und Einklemmen der Schraube(n) 14 in der Endlage. Die Bremse 22 soll verhindern, dass der Airbagdeckel 2 durch seine Auftreffenergie (ca. 400 g) wieder zurückgeschleudert wird. Andere Sperr-, Klemm- und Verriegelungsmechaniken sind dem Fachmann ohne weiteres geläufig und können entsprechend eingesetzt werden. Dasselbe gild für die Schrauben 14, die nur als Beispiele für entsprechende Fortsätze zu verstehen sind, die mit einer Kulissenführung in geeigneter Weise zusammenwirken.

### Im Rahmen der vorliegenden Erfindung liegen ferner folgende Merkmalskombinationen:

Die Airbagvorrichtung enthält bevorzugt eine durch Sprengstoff angetriebene Mechanik, die den Airbagdeckel in das Airbagmodul zieht. Eine Weiterbildung davon besteht darin, dass die Mechanik derart ausgebildet ist, dass ein paßgenau abgedichteter Kolben in Form einer Tasse über den Generator gestülpt ist und gleichzeitig im Gehäuse des Moduls geführt wird. Zusätzlich kann sich der Kolben derart in Kulissenführungen im Gehäuse schraubend bewegen, dass davon ausgehende Seile oder andere Verbindungsmittel, wie z.B. Bänder, in Quer- und Längsrichtung bewegt werden, bedingt durch die schraubenförmig ausgeführten Kulissen. Eine Seilanbindung kann am Kolben derart angebracht und in der Kulisse geführt sein, dass Seilanbindung und Kulisse eine Einheit bilden. Ferner kann/können die Kulissenführung(en) derart gestaltet sein, dass eine ausreichende Bewegungskomponente zur Bewegung der/des Airbagdekkel(s) vorhanden ist. Die Mechanik zur Airbagdeckelbewegung in das Modul bzw. die Armaturentafel ist sehr einfach. Solche Airbagvorrichtungen sind insbesondere vorteilhaft für leichte bzw. leicht zu öffnende Airbagdeckel, wie beispielsweise solche, die nicht in den Armaturenkörper integriert sind.

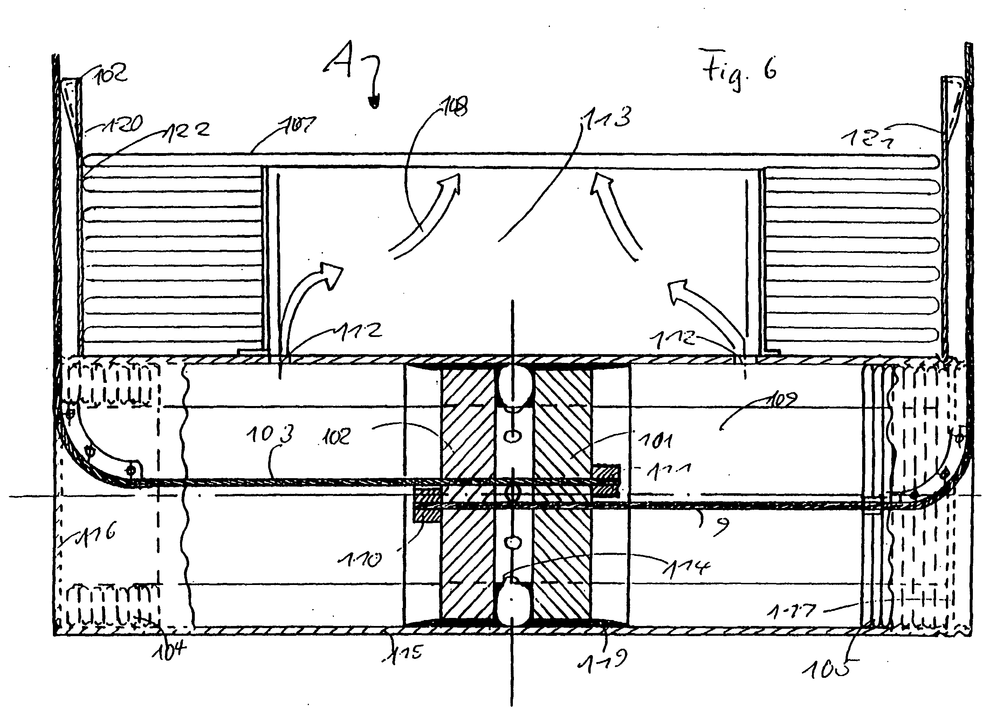

Die Figuren 6 zeigt einen Airbaggenerator 109, um den Ringkolben 101 und 102 derart angebracht sind, daß ein Gasaustritt 106 zwischen dem Ringkolben 101 und 102 gebildet ist. An den Ringkolben 101 und 102 sind Zugseile 103 und 109 mittels Seilkauschen 110 und 111 befestigt.

Die Ringkolben 101 und 102 sind außen zur Bildung eines Kompressionsraumes 114 mit einem zylindrischen Rohr 115 ummantelt. Das zylindrische Rohr 115 ist beidseitig mit Deckeln 116 und 117 versehen, damit die Ringkolben 101 und 102 in ihrer Bewegung begrenzt sind. Dämpfungen 104 und 105 sind eingebaut, um die Energie der Ringkolben 101 und 102 zu begrenzen. Die Ringkolben 101 und 102 sind abgedichtet mit einem durch Druck und/oder temperaturschmelzenden Kunststoff 119, wie z. B. POM.

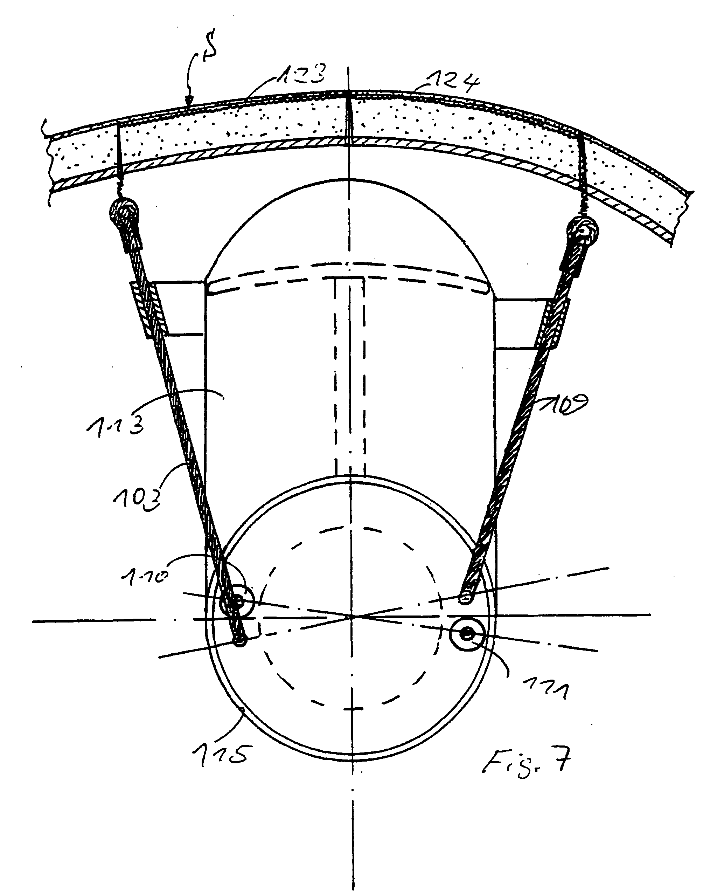

Durch eine Explosion im Generator 118 bewegen sich die Ringkolben 101 und 102 derart, daß die Zugseile 103 und 109 nach unten gezogen werden. Stirnwände 120 und 121 eines Airbagkastens oder -modulgehäuses 122 sind derart mit einer Ausformung 126 versehen, daß Airbagklappen 123, 124 dort aufliegen und um diese an einem dachförmigen Giebel 125 entlanggleiten, wie in der Figur 7 gezeigt ist.

Die Figuren 7 zeigt eine Seitenansicht der Figur 6. Zu sehen sind hier die Zugseile 103 und 109, die Seilkausche 110 und 111, das Airbagmodul 113, das zylindrische Rohr 115, der Generator 118, die Airbagklappen 123, 124 und der Giebel 125 des Airbagmoduls 113.

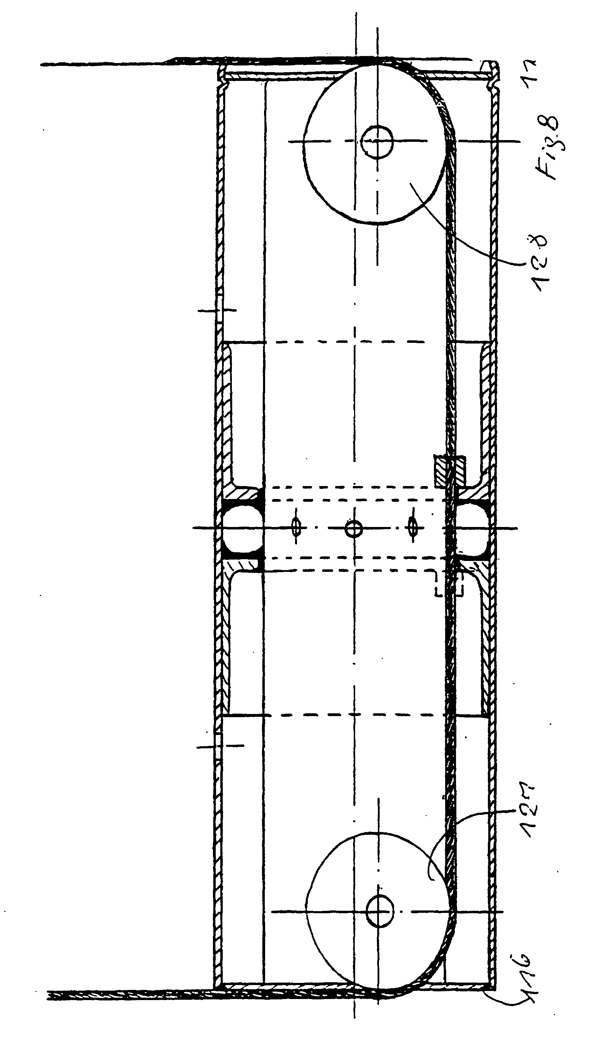

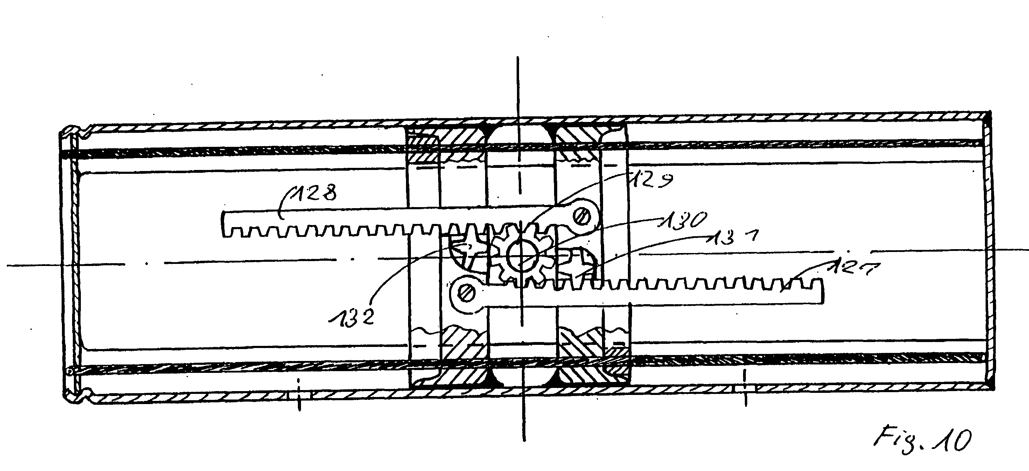

Die Figur 8 zeigt das gleiche System, jedoch mit Umlenkrollen 127 und 128, die, wie in der Figur gezeigt ist, zwischen dem Generator 118 und dem zylindrischen Rohr angebracht sind. Hierdurch entsteht eine sehr platzsparende Lösung. Die Zugseile 103 und 109 sind durch die Decke 116 und 117 derart durchgesteckt, daß man sie zur Montage an den Airbagklappen 123, 124 leicht greifen kann. Die Figur 10 zeigt eine alternative Mechanik zu den beiden Ringkolben 101 und 102 für den Fall, daß sie durch den Widerstand der Airbagklappen unterschiedlich schnell und weit laufen sollten und damit die Airbagklappen 123 und 124 schräg ziehen würden. Um diese Problematik zu vermeiden, sind an den Ringkolben 101 und 102 Zahnstangen 127 und 128 derart angebracht (Figur 10), daß diese zwangsgeführt über ein Zahnrad 129 gezogen werden, das auf einer Achse 130 läuft, die am Gasgenerator befestigt ist. Hierdurch müssen beide Ringkolben 101 und 102 gleich laufen. Zur besseren Abdichtung laufen in Taschen der Ringkolben 101 und 102 Kunststoffzahnrädchen 131 und 132 mit, die den Leckstrom des Gases minimieren und so ausgeführt sind, daß sie durch Druck und/oder Hitze schmelzen.

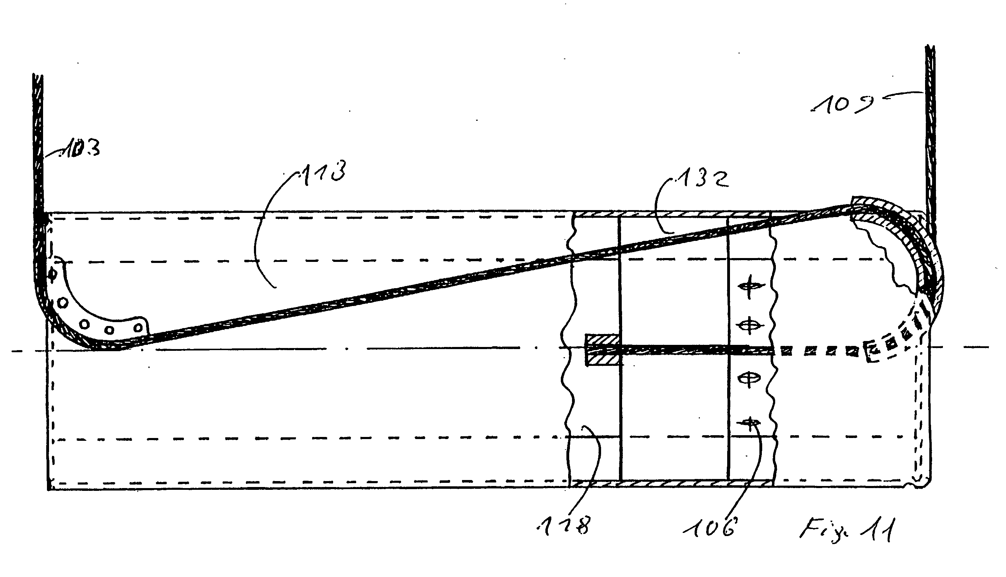

Die Figur 11 zeigt einen einzelnen Ringkolben 132, der Verwendung findet bei einem Gasaustritt 106 einseitig an einem Generator 118. Die Zugseile 103 und 109 werden, wie gezeigt ist, geführt und in dieser alternative außen am Airbagmodul 113 entlang geführt.

Zusammenfassend wird eine Airbagvorrichtung mit einer einfachen Airbagdeckeleinzugsmechanik geschaffen, die über einen Kolben, der über einen Generator übergestülpt ist, und den Gasdruck des letzteren angetrieben wird. Bewegung und Kraft sind in jedem Fall ausreichend für leicht zu öffnende Airbagdeckel (geringes Gewicht, separates Bauteil).

Insbesondere schafft die Erfindung eine Antriebsmechanik für Klappen eines Airbagmoduls in einer platzsparenden Bauweise. Dies wird mit einer Schraubenwegung eines Kolbens zum Aufwickeln von Zugseilen erreicht. Nicht erfindungsgemäß wird dies mit Ringkolben für einen solchen Fall erreicht, daß der Airbaggenerator im Durchmesser klein und überwiegend in seiner Länge das Modul füllt, so daß beispielsweise eine Unterbringung eines Tassenkolbens nicht möglich ist. Es werden platzsparende Ringkolben für dünne und lange Generatoren verwendet. Femer ist eine interne Seilführung im Modul von Vorteil. Es kann eine abschmelzende Kolbendichtung zum Einsatz kommen. Weiterhin kann ein einfacher, stirnseitiger Zugang der Zugseile vorgesehen sein.

### Bezeichnungen

- A: Airbagvorrichtung
- S: Schließlage
- O: Offenlage
- 1: Armaturentafel
- 2: Airbagdeckel
- 3: Seile
- 4: Anschraubung
- 5: Kolben
- 6: Airbag
- 7: Airbaggehäuse
- 8: Karosserie
- 9: Modul
- 10: Zündkartusche
- 11: Generator
- 12: Gasdurchströmlöcher
- 13: Gasdurchströmlöcher
- 14: Schrauben
- 15: Abstandsringe
- 16: Gehäuse
- 17: Deckel
- 18: Deckel
- 19: Seilanbindungen
- 20: Kulissenführungen
- 21: Gasdurchgangsloch
- 22: Bremse
- 101: Ringkolben
- 102: Ringkolben
- 103: Zugseil
- 104: Dämpfung
- 105: Dämpfung
- 106: Gasaustritt
- 107: Airbag
- 108: Gasstrom
- 109: Zugseil
- 110: Seilkausche
- 111: Seilkausche
- 112: Gesteuerte Gaszufuhr Airbag
- 113: Airbagmodul
- 114: Kompressionsraum
- 115: Zylindrisches Rohr
- 116: Deckel
- 117: Deckel
- 118: Generator
- 119: Dichtung
- 120: Stirnwand
- 121: Stirnwand
- 122: Airbagkasten
- 123: Airbagklappen
- 124: Airbagklappen
- 125: Giebel
- 126: Ausformung
- 127: Zahnstange
- 128: Zahnstange
- 129: Zahnrad
- 130: Achse
- 131: Zahnrädchen
- 132: Zahnrädchen

## Patentansprüche

1. Airbagvorrichtung mit einem Airbagmodul (9) und wenigstens einem Airbagdeckel (2), der mittels Zugeinrichtungen (3) mit einem Kolben (5) verbunden ist, der pyrotechnisch für eine Linearbewegung beaufschlagbar ist, wobei der Airbagdeckel (2) bei Beaufschlagung des Kolbens (5) aus einer Schließlage, in der er einen Austrittsweg eines Airbags (6) aus dem Airbagmodul (9) abdeckt, in eine Offenlage bewegt wird, in der er den Austrittsweg des Airbags (6) aus dem Airbagmodul (9) freigibt und wobei die Zugeinrichtungen (3) seilartig ausgestaltet sind, **dadurch gekennzeichnet, dass** eine schraubenartige Zwangsführung (20) für den Kolben (3) vorgesehen ist, so dass der Kolben (5) infolge einer Beaufschlagung während seiner Linearbewegung zusätzlich eine Drehbewegung ausführt und dabei die Zugeinrichtungen (3) aufwickelt.

2. Airbagvorrichtung nach Anspruch 1, **dadurch gekennzeichnet, dass** die Zwangsführung durch wenigstens eine Kulissenführung (20) längs des Bewegungsweges des Kolbens (5) gebildet ist, wobei der kolben (5) wenigstens einen Fortsatz (14) aufweist, der an der Kulissenführung (20) anliegt oder in die Kulissenführung (20) eingreift.

3. Airbagvorrichtung nach Anspruch 2, **dadurch gekennzeichnet, dass** der wenigstens eine Fortsatz (14) durch einen Bolzen oder eine Schraube (14) gebildet ist.

4. Airbagvorrichtung nach Anspruch 2 oder 3, **dadurch gekennzeichnet, dass** an dem Kolben (5) in Richtung seiner Linearbewegung beabstandet zwei Fortsätze (14) vorgesehen sind und jedem dieser beiden Fortsätze (14) eine Kulissenführung (20) zugeordnet ist.

5. Airbagvorrichtung nach einem der Ansprüche 2 bis 4, **dadurch gekennzeichnet, dass** die Zugeinrichtungen (3) über die vorhandenen Fortsätze (14) des Kolbens (5) an letzterem angreifen.

6. Airbagvorrichtung nach einem der vorhergehenden Ansprüche, **dadurch gekennzeichnet, dass** die Zugeinrichtungen zumindest einen Draht, ein Seil (3) oder ein Band enthalten, mittels dem der Airbagdeckel (2) mit dem Kolben (5) verbunden ist.

7. Airbagvorrichtung nach Anspruch 6, **dadurch gekennzeichnet, dass** das Seil (3) oder der Draht aus Metall besteht oder dass das Band aus einem textilen Material oder Kunststoff oder einer Mischung daraus besteht.

8. Airbagvorrichtung nach einem der vorhergehenden Ansprüche, **dadurch gekennzeichnet, dass** der Kolben (5) tassenartig über einen Gasgenerator (11) des Airbagmoduls (9) gestülpt ist.

9. Airbagvorrichtung nach einem der vorhergehenden Ansprüche, **dadurch gekennzeichnet, dass** der Kolben (5) in einem Gehäuse (7) des Airbagmoduls (9) insbesondere in einem Gehäuse (16) des Gasgenerators (11) geführt ist.

10. Airbagvorrichtung nach einem der vorhergehenden Ansprüche, **dadurch gekennzeichnet, dass** die Kulissenführung (20) eine Steuerkante oder eine Schlitzkulisse enthält.

11. Betriebsverfahren für eine Airbagvorrichtung, wobei wenigstens ein Airbagdeckel (2) mittels Zugeinrichtungen (3) durch einen Kolben (5), der pyrotechnisch für eine Linearbewegung beaufschlagt wird, aus einer Schließlage, in der er einen Austrittsweg eines Airbags (6) aus dem Airbagmodul (9) abdeckt, in eine Offenlage bewegt wird, in der er den Austrittsweg des Airbags aus dem Airbagmodul freigibt, **dadurch gekennzeichnet, dass** der Kolben (5) infolge einer Beaufschlagung eine schraubenartige Bewegung ausführt und dabei die Zugeinrichtungen (3) aufwickelt, so dass diese an dem Airbagdeckel (2) ziehen und ihn aus der Schließlage in die Offenlage bewegen.

## Claims

1. Airbag device with an airbag module (9) and at least one airbag cover (2), which is connected to a piston (5) by means of pulling devices (3), which can be subjected to pyrotechnical action in order to produce a linear movement, wherein, when the piston (5) is acted upon, said airbag cover (2) moves out of a closed position, in which it blocks an exit path of an airbag (6) out of the airbag module (9), into an open position, in which it clears the exit path of the airbag (6) out of the airbag module (9), and wherein the pulling devices (3) are configured in the form of cables, **characterized in that** a helical positive guide (20) is provided for the piston (3), so that, due to the action upon it, the piston (5) additionally performs a rotational movement during its linear movement, winding up the pulling devices (3) as it does so.

2. Airbag device according to Claim 1, **characterized in that** the positive guide is formed by at least one guideway (20) along the path of movement of the piston (5), wherein the piston (5) has at least one extension (14), which rests against the guideway (20) or engages in the guideway (20).

3. Airbag device according to Claim 2, **characterized in that** the at least one extension (14) is formed by a bolt or a screw (14).

4. Airbag device according to Claim 2 or 3,
**characterized in that** two extensions (14), spaced apart in the direction of its linear motion, are provided on the piston (5), and a guideway (20) is assigned to each of these two extensions (14).

5. Airbag device according to any of Claims 2 to 4, **characterized in that** the pulling devices (3) engage on the piston (5) by means of the extensions (14) of the piston that are present.

6. Airbag device according to any of the preceding claims, **characterized in that** the pulling devices comprise at least one wire, cable (3) or strap, by means of which the airbag cover (2) is connected to the piston (5).

7. Airbag device according to Claim 6, **characterized in that** the cable (3) or the wire is composed of metal, or **in that** the strap is composed of a textile material or plastic or a mixture thereof.

8. Airbag device according to any of the preceding claims, **characterized in that** the piston (5) is placed in a cup-like manner over a gas generator (11) of the airbag module (9).

9. Airbag device according to any of the preceding claims, **characterized in that** the piston (5) is guided in a housing (7) of the airbag module (9), in particular in a housing (16) of the gas generator (11).

10. Airbag device according to any of the preceding claims, **characterized in that** the guideway (20) comprises a control edge or a slotted guideway.

11. Operating method for an airbag device, at least one airbag cover (2) being moved out of a closed position, in which it blocks an exit path of an airbag (6) out of the airbag module (9), into an open position, in which it clears the exit path of the airbag out of the airbag module, by means of pulling devices (3), by a piston (5), which is subjected to pyrotechnical action in order to produce a linear movement, **characterized in that**, due to the action upon it, the piston (5) performs a screw-like movement, winding up the pulling devices (3) as it does so, so that these pull the airbag cover (2) and move it from the closed position to the open position.

## Revendications

1. Dispositif à coussin gonflable de sécurité comprenant un module à coussin gonflable de sécurité (9) et au moins un couvercle de coussin gonflable de sécurité (2) qui est relié à un piston (5) au moyen de dispositifs de traction (3), lequel peut effectuer une course motrice par effet pyrotechnique pour accomplir un mouvement linéaire, le couvercle du coussin gonflable de sécurité (2), lors de la course motrice du piston (5), étant déplacé d'une position fermée dans laquelle il recouvre une voie de sortie d'un coussin gonflable de sécurité (6) hors du module à coussin gonflable de sécurité (9), vers une position ouverte dans laquelle il libère la voie de sortie du coussin gonflable de sécurité (6) hors du module à coussin gonflable de sécurité (9) et les dispositifs de traction (3) étant réalisés sous la forme de câbles, **caractérisé en ce qu'**il est prévu un guidage forcé de type vis (20) pour le piston (3) de manière à ce que le piston (5), du fait d'une course motrice, effectue en plus un mouvement rotatif pendant son mouvement linéaire et enroule à cette occasion les dispositifs de traction (3).

2. Dispositif à coussin gonflable de sécurité selon la revendication 1, **caractérisé en ce que** le guidage forcé est formé par au moins un guide coulissant (20) le long du trajet de déplacement du piston (5), le piston (5) présentant au moins un prolongement (14) qui repose sur le guide coulissant (20) ou qui pénètre dans le guide coulissant (20).

3. Dispositif à coussin gonflable de sécurité selon la revendication 2, **caractérisé en ce que** l'au moins un prolongement (14) est formé par un boulon ou une vis (14).

4. Dispositif à coussin gonflable de sécurité selon la revendication 2 ou 3, **caractérisé en ce que** deux prolongements (14) espacés sont prévus sur le piston (5) dans le sens de son mouvement linéaire et un guide coulissant (20) est associé à chacun des ces deux prolongements (14).

5. Dispositif à coussin gonflable de sécurité selon l'une des revendications 2 à 4, **caractérisé en ce que** les dispositifs de traction (3) saisissent le piston (5) par le biais des prolongements (14) présents de ce dernier.

6. Dispositif à coussin gonflable de sécurité selon l'une des revendications précédentes, **caractérisé en ce que** les dispositifs de traction comprennent au moins un fil, un câble (3) ou une bande au moyen duquel le couvercle du coussin gonflable de sécurité (2) est relié au piston (5).

7. Dispositif à coussin gonflable de sécurité selon la revendication 6, **caractérisé en ce que** le câble (3) ou le fil est en métal ou que la bande se compose d'une matière textile ou d'une matière plastique ou d'un mélange de celles-ci.

8. Dispositif à coussin gonflable de sécurité selon l'une des revendications précédentes, **caractérisé en ce que** le piston (5) est retourné à la manière d'une tasse au-dessus d'un générateur de gaz (11) du module à coussin gonflable de sécurité (9).

9. Dispositif à coussin gonflable de sécurité selon l'une des revendications précédentes, **caractérisé en ce que** le piston (5) est guidé dans un boîtier (7) du module à coussin gonflable de sécurité (9), notamment dans un boîtier (16) du générateur de gaz (11).

10. Dispositif à coussin gonflable de sécurité selon l'une des revendications précédentes, **caractérisé en ce que** le guide coulissant (20) comprend un bord de commande ou une coulisse fendue.

11. Procédé de fonctionnement pour un dispositif à coussin gonflable de sécurité, avec lequel au moins un couvercle de coussin gonflable de sécurité (2) est déplacé d'une position fermée dans laquelle il recouvre une voie de sortie d'un coussin gonflable de sécurité (6) hors du module à coussin gonflable de sécurité (9), vers une position ouverte dans laquelle il libère la voie de sortie du coussin gonflable de sécurité hors du module à coussin gonflable de sécurité, au moyen de dispositifs de traction (3) par un piston (5), lequel effectue une course motrice par effet pyrotechnique pour accomplir un mouvement linéaire, **caractérisé en ce que** le piston (5), du fait d'une course motrice, effectue un mouvement à la manière d'une vis et enroule à cette occasion les dispositifs de traction (3) de manière à ce que ceux-ci tirent sur le couvercle de coussin gonflable de sécurité (2) et le déplacent de sa position fermée vers sa position ouverte.
